(19) **Europäisches Patentamt**
**European Patent Office**
**Office européen des brevets**

(11) Publication number: **0 269 675 B1**

(12) # EUROPEAN PATENT SPECIFICATION

(45) Date of publication of patent specification:
**27.12.91 Bulletin 91/52**

(51) Int. Cl.$^5$: **H04N 5/33, H04N 5/335**

(21) Application number: **87903535.0**

(22) Date of filing: **04.05.87**

(86) International application number:
**PCT/US87/01004**

(87) International publication number:
**WO 87/07769 17.12.87 Gazette 87/27**

(54) **PARALLEL PROCESSOR MODULE FOR THERMAL IMAGING SENSORS.**

(30) Priority: **13.06.86 US 874253**

(43) Date of publication of application:
**08.06.88 Bulletin 88/23**

(45) Publication of the grant of the patent:
**27.12.91 Bulletin 91/52**

(84) Designated Contracting States:
**BE CH DE FR GB IT LI NL SE**

(56) References cited:
**Proceedings of the 1980 IEEE International Symposium on Circuits and Systems, Pt III, Houston, 28-30 April 1980 IEEE, 1980 (New York, US), Kansy et al.: "Analog MOS applications to IR signal processing", pages 723-727**

(56) References cited:
**IEEE Transactions on Electron Devices, ED 32, No. 8, August 1985 (New York, US), P.A. Levine: "Low-noise CCD signal recovery", pages 1534-1537**
**Proceedings of MELECON '85, vol. II: Digital Signal Processing, Elsevier Science Publishers B.V. (North Holland) IEEE Catalog No. 85 CH 2185-7 (New York, US), H. Wey et al.: "Correlated triple sampling: a digital low-noise readout-method for CCD's", pages 209-212**

(73) Proprietor: **Hughes Aircraft Company**
**7200 Hughes Terrace P.O. Box 45066**
**Los Angeles, California 90045-0066 (US)**

(72) Inventor: **KLATT, Robert, W.**
**32350 Searaven**
**Rancho Palos Verdes, CA 90274 (US)**

(74) Representative: **KUHNEN, WACKER & PARTNER**
**Alois-Steinecker-Strasse 22 Postfach 1553**
**W-8050 Freising (DE)**

## Description

This invention is related to the field of infrared sensing, and more particular, to a method and apparatus for processing the outputs from a thermal imaging sensor.

Elemental infrared detectors are often used in cunjunction with missiles and night systems to sense the presence of electromagnetic radiation having a wavelength of 1-15 um. These detectors often operate on the principle of photoconductivity, in which infrared radiation changes the electrical conductivity of the material upon which the radiation is incident. Such detectors are often fabricated from mercury-cadmium-telluride, though other materials such as CdTe and CdSe are also used.

While an array of elemental infrared detectors may be used in an elemental system in which the detectors sense the energy generated by an object space, they may also be used in thermal imaging systems. In one such imaging system using a charge coupled device ("CCD"), the elemental detectors produce free charge carriers which are then injected into the CCD structure and are processed by using time delay integration and parallel-to-serial scan conversion. In real time thermal imaging systems such as forward locking infrared ("FLIR") imaging sensors, moving mirrors are used to scan radiation emitted by the object space across an array of elemental detectors, the temporal outputs of which form a two-dimensional representation of the thermal emission from the object space.

To process the outputs of the elemental detectors in a detector array, thermal imaging systems often use multiple channels of parallel signal processing electronics which are electrically connected to a multiplexer. The multiplexer is used to convert the outputs of the channels to a single serial output. Processors which provide the combination of good noise performance, good modulation transfer function, linear phase response, and good transient response necessary for larger imaging systems are usually complex and have many parts and generally have high power consumption. This is particularly true for imaging systems with over one hundred detector elements.

From document Proceedings of the 1980 IEEE International Symposium on Circuits and Systems, Part III, Houston, 28-30 April 1980, IEEE, 1980 (New York, US), Kansy et al, "Analog MOS Applications to IR Signal Processing", pages 723-727, the application of NMOS technology to the development of analogue circuitry for IR signal processing is known. A silicon processor circuitry developed for focal plane arrays employing CID detectors is disclosed which comprises integration means for generating a plurality of voltages in response to a plurality of input signals, storage means for IR-generated carriers and means for multiplexing the stored signals to generate a serial output signal. The document is related to a system for improving the signal to noise ratio. The improving is achieved by the use of time-delay-and-integration (TDI) wherein each pixel is integrated over a number of samples.

Document IEEE Transactions on Electron Devices, Ed. 32, No. 8, August 1985 (New York, US), P. A. Levine :"Low-noise CCD signal recovery", pages 1534-1537, relates to a device for low noise CCD signal recovery comprising a low-noise preamplifier, a R.C. differentiator, a buffer amplyfier and a sample and hold device. Only one processing channel is considered. In this device, however, no converter means for converting input signals into proportional current signals and no integration means for integrating current signals for a predetermined length of time are provided.

It is an object of the invention to improve the transmission characteristic of a system for converting a plurality of parallel input signals from an elemental detector array into a serial output signal.

This object is achieved by an apparatus in accordance with claim 1 and a method in accordance with claim 9.

According to the preferred embodiment of the present invention, an apparatus is provided for converting a plurality of parallel input signals from a thermal detector array into a serial output signal. The apparatus comprises a converter circuit for converting the input signals into a plurality of current signals. An integration circuit is also provided for integrating the current signals for a predetermined length of time. The integration circuit is operable to generate a plurality of voltages in response to the current signals. A storage circuit is also provided to generate and store a plurality of stored signals which are proportional to the plurality of voltages generated by the integration circuit. A multiplexing circuit is also provided which is operable to generate the serial output signal from the stored signals generated by the storage circuit.

Various advantages of the present invention will become apparent to one skilled in the art upon reading the following specification and by reference to the following drawings in which:

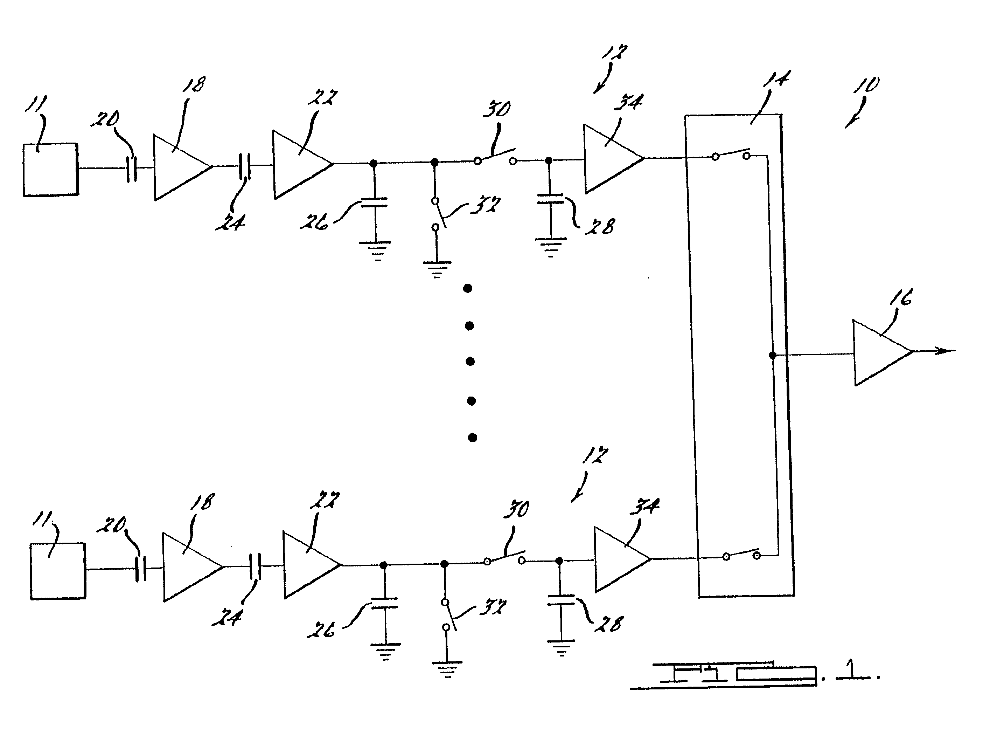

Fig. 1 is a schematic diagram of the parallel processing module according to the present invention.

Referring to FIG. 1, a parallel processor module 10 is shown for processing the outputs of a plurality of elemental detectors 11 which form a detector array. The parallel processor module 10 comprises a plurality of signal processor channels 12 electrically communicating with a multiplexer 14. Each of the signal processor channels 12 receives the output from one elemental detector 11 in the detector array. While only two of the signal processor channels 12 are shown in FIG. 1, it is to be understood that a similar signal processor channel is associated with each of the elemental detectors in the detector array. The multiplexer 14 is used to sequentially sample the outputs from each of the signal processor channels 12 and serially deliver the outputs to an amplifier 16 which communicates with the downstream electronics. The amplifier 16 permits isolation of the multiplexer 14 from the downstream electronics by providing a high load input and a low output impedance. While the amplifier 16 may be a Model No. 3551 manufactured by Burr Brown, other suitable amplifiers may be used.

Each of the signal processor channels 12 includes a preamplifier 18 which communicates with an associated elemental detector through a coupling capacitor 20. The preamplifier 18 is used to increase the signal level generated by the elemental detector without appreciable degradation of the signal-to-noise ratio of the signal. The amplifier 18 may be a common module preamplifier, though other suitable preamplifiers may be used. The coupling capacitor 20 is used to reduce the impact of relatively large bias voltages required to drive the elemental detectors on the operation of the preamplifier 18. While the coupling capacitor 20 may typically have a capacitance of 47mfd, other suitable values may be used.

The output of the preamplifier 18 is delivered to a variable gain transconductance amplifier 22 through a coupling capacitor 24. The transconductance amplifier 22 is used to convert to the voltage provided by the preamplifier 18 into a proportional current signal. The amplifier 22 has a maximum transconductance of approximately 4 milliamps/volt and a bandwidth of 400kHz, thought it is to be understood that other suitable means for converting the output of the preamplifier 18 into a current signal may be used. The coupling capacitor 24 is used to remove the DC bias from the signal delivered by the preamplifier 18. While the capacitance of the capacitor 24 may typically be 47mfd, other suitable values may be used.

To integrate the current signal generated by the transconductance amplifier 22, an integration capacitor 26 is provided. The integration capacitor 26 is used to accumulate an amount of charge which is proportional to the integral of the current delivered by the transconductance amplifier 18 during a predetermined integration period. The integration period is selected to be between 50 percent to 100 percent of the dwell time (i.e. the width of the detector element divided by the scan velocity), and may typically be 10 microseconds in duration. While the integration capacitor 26 may have a capacitance of 100pf, other suitable means for integrating the current signal from the transconductance amplifier 22 may be used.

To provide a stored voltage signal which is proportional to the voltage on the integration capacitor 26 at the end of the integration period, a storage capacitor 28 is provided. The storage capacitor 28 electrically communicates with the integration capacitor 26 through a transmission gate 30. The transmission gate 30 operates as a switch to selectively connect the integration capacitor 26 with the storage capacitor 28. The transmission gate 30 is formed from a n-channel and a p-channel MOS transistors arranged in parallel, though other suitable switches may be used. When the transmission gate 30 is closed at the end of the integration period, current flows from the integration capacitor 26 to the storage capacitor 28 until the charge stored by each of the capacitors 26 and 28 is substantially equal. The transmission gate 30 is then opened to permit the integration capacitor 26 to charge during the subsequent integration period. The output of the storage capacitor 28 can then be sampled by the multiplexer 14 while the current from the transconductance amplifier 22 is being integrated. To increase performance of the module 10, the RC time constant of the capacitance of the storage capacitor 28 and the resistance of the transmission gate 30 should be relatively small with respect to the sample time of the multiplexer 14. While the capacitance of the storage capacitor 28 may be 10pf, other suitable means for storing a signal proportional to the voltage of the integration capacitor 26 at the end of the integration period may be used.

Each of the signal processor channels 12 further includes a reset switch 32 which is operable to reset the integration capacitor 26 at the start of each integration period. The reset switch 32 permits the charge stored on the integration capacitors 26 to drain to ground prior to integration. The RC time constant formed from the resistance of the reset switch 32 and the capacitance of the integration capacitor 26 should be small in comparison to the integration time to increase performance of the module 10.

To buffer the output from the storage capacitor 28, a buffer amplifier 34 is provided. The buffer amplifier 34 has a high input impedance to permit electrical isolation of the capacitor 28 from the multiplexer 14. The output from the buffer amplifier 34 is delivered to the multiplexer 14 which operates in the manner described above.

To illustrate the operation of the present invention, a non-limiting example will be presented. The output from twenty elemental detectors 11 are delivered to twenty signal processor channels 12, each having a transconductance amplifier 18 and coupling capacitors 20 and 24. The integration capacitor 26 of each of the channels 12 is charge by the output of the respective transconductance amplifier 22 while the transmission gate 30 and the reset switch 32 are opened. After a suitable integration time, the transmission gate 30 closes causing a portion of the charge on the integration capacitors 26 to be delivered to the respective storage capacitors 28. The transmission gates 30 then open after the voltage on the integration capacitor 26 and the storage capacitor 28 have become substantially equal, thereby preventing further charge transfer between the capacitors 26 and 28. The reset switch 32 of each of the signal processor channels 12 is then closed to discharge the integration capacitor 26 prior to the next integration cycle. After the integration capacitor 26 has been discharged, the reset switch 32 is opened and new integration cycle begins. While the integration capacitor 26 is charging, the output of the storage capacitor 28 is delivered to the multiplexer 14 through the buffer 34. The multiplexer 14 then sequentially samples the outputs from each of the buffers 34 to provide a multiplexed signal to the amplifier 16.

## Claims

1. An apparatus for converting a plurality of parallel voltage input signals from an elemental detector array into a serial output signal comprising:

integration means (26) for generating a plurality of voltages in response to said plurality of voltage input signals;

storage means (28) operable to generate and store a plurality of signals;

means (14) for multiplexing said stored signals to generate said serial output signal;

characterized in

converter means for converting said voltage input signals into a plurality of current signals, said converter means comprises amplifier means (22) for converting said input signals into proportional current signals;

said integration means (26) being provided for integrating each of said current signals for a predetermined length of time, and said integration means (26) being operable to generate a plurality of voltages in response to said current signals;

said integration means (26) being electrically connected with said storage means (28) through a plurality of transmission gates (30); and

said signals stored in said storage means (28) are proportional to said plurality of voltages generated by said integration means (26).

2. The apparatus of claim 1, wherein said amplifier means (22) comprises a plurality of transconductance amplifiers (22).

3. The apparatus of claim 1, wherein said integration (26) means comprises a first plurality of capacitors (26).

4. The apparatus of claim 3, wherein said storage means (28) comprises a second plurality of capacitors (28).

5. The apparatus of claim 1, wherein said means for multiplexing (14) comprises a multiplexer (14) operable to convert said stored signals into said serial output signal.

6. The apparatus of claim 1, comprising means (18) for amplifying said plurality of input signals in electrical communication with said converter means (22).

7. The apparatus of claim 1, comprising means (34) for buffering the outputs of said storage means (28) in electrical communication with said means (14) for multiplexing.

8. The apparatus of claim 3, characterized in comprising a plurality of reset switches (32) operable to selectively drain the charge on said first plurality of capacitors (26).

9. A method for converting the parallel outputs from an elemental detector array into a serial signal comprising the steps of:

delivering said parallel outputs to a plurality of signal processor channels;

amplifying at least one of the outputs by amplifier means (18, 22);

integrating at least one of the outputs;

storing at least one of the outputs by a storage circuit (28); and

sequentially sampling the outputs from said signal processor channels by a multiplexer (14) to produce said serial signal;

characterized in that

said step of amplifying at least one of the outputs provides a proportional current signal;

said step of integrating at least one of the outputs is performed by an integration circuit (26) electrically communicating with said amplifier means (18, 22);

said step of storing comprises storing of at least one of said integrated outputs;

and said step of storing is performed by said storage circuit (28) being electrically connected with said integrating circuit (26) through a transmission gate (30).

10. The method of claim 9, wherein the step of amplifying is performed by a transconductance amplifier (22).

11. The method of claim 9, wherein the step of integrating is performed by an integration capacitor (26) electrically communicating with said transconductance amplifier (22).

12. The method of claim 9, wherein the step of storing is performed by a storage capacitor (28).

13. The method of claim 9, characterized in comprising the step of buffering at least one of the outputs by a buffer (34) operable to electrically isolate said storage circuit (28) from said multiplexer (14).

14. The method of claim 9, characterized in comprising the step of resetting at least one of said signal processor channels by a reset switch (32) operable to selectively drain charge from said integration circuit (26).

15. The method of claim 9, characterized in comprising the additional step of buffering the output of said multiplexer (14).

16. The method of claim 9, characterized in comprising the additional steps of:

integrating the output of said amplifier means (18, 22) for a predetermined length of time;

closing a transmission gate (30) between said storage circuit (28) and said integration circuit (26) to permit said storage circuit (28) to hold a voltage which is at a level proportional to the output voltage of said integration circuit (26) at the end of said predetermined length of time;

opening said transmission gate (30) to prevent the transfer of charge from said integration circuit (26) to said storage circuit (28); and

discharging said integration circuit (26).

## Patentansprüche

1. Gerät zur Umsetzung einer Vielzahl von parallelen Eingangsspannungsignalen aus einer Elementardetektor-Anordnung in ein serielles Ausgangssignal, mit:

einer Integrationseinrichtung (26), die im Ansprechen auf die Vielzahl von Eingangsspannungssignalen eine Vielzahl von Spannungen erzeugt;

einer Speichereinrichtung (28), die zum Erzeugen und Speichern einer Vielzahl von Signalen betreibbar ist;

einer Einrichtung (14) zum Multiplexen der gespeicherten Signale, um das serielle Ausgangssignal zu erzeugen;

**gekennzeichnet** durch

eine Umsetzeinrichtung zum Umsetzen der Eingangsspannungssignale in eine Vielzahl von Stromsignalen, wobei die Umsetzeinrichtung eine Verstärkereinrichtung (22) zum Umsetzen der Eingangssignale in proportionale Stromsignale aufweist;

wobei die Integrationseinrichtung (26) zum Integrieren jedes der Stromsignale für eine vorbestimmte Zeitdauer vorgesehen ist, und wobei die Integrationseinrichtung (26) im Ansprechen auf die Stromsignale zum Erzeugen einer Vielzahl von Spannungen betreibbar ist;

wobei die Integrationseinrichtung (26) mit der Speichereinrichtung (28) über eine Vielzahl von Übertragungsgattern (30) elektrisch verbunden ist; und wobei die in der Speichereinrichtung (28) gespeicherten Signale proportional zu der Vielzahl von Spannungen sind, die von der Integrationseinrichtung (26) erzeugt werden.

2. Gerät nach Anspruch 1, bei dem die Verstärkereinrichtung (22) eine Vielzahl von Vorwärtsleitwert-Verstärkern (22) aufweist.

3. Gerät nach Anspruch 1, bei dem die Integrationseinrichtung (26) eine erste Vielzahl von Kondensatoren (26) aufweist.

4. Gerät nach Anspruch 3, bei dem die Speichereinrichtung (28) eine zweite Vielzahl von Kondensatoren (28) aufweist.

5. Gerät nach Anspruch 1, bei dem die Einrichtung zum Multiplexen (14) einen Multiplexer (14) aufweist, der zum Umsetzen der gespeicherten Signale in das serielle Ausgangssignal betreibbar ist.

6. Gerät nach Anspruch 1, mit einer Einrichtung (18) zum Verstärken der Vielzahl von Eingangssignalen in elektrischer Verbindung mit der Umsetzeinrichtung (22).

7. Gerät nach Anspruch 1, mit einer Einrichtung (34) zum Puffern der Ausgänge der Speichereinrichtung (28) in elektrischer Verbindung mit der Einrichtung (14) zum Multiplexen.

8. Gerät nach Anspruch 3, **gekennzeichnet** durch eine Vielzahl von Rücksetz-Schaltern (32), die zum selektiven Abführen der Ladung aus der ersten Vielzahl von Kondensatoren (26) betreibbar sind.

9. Verfahren zum Umsetzen der parallelen Ausgangssignale aus einer Elementardetektor-Anordnung in ein serielles Signal, das folgende Schritte umfaßt:

Liefern der parallelen Ausgangssignale zu einer Vielzahl von Signalverarbeitungskanälen;

Verstärken mindestens eines der Ausgangssignale mittels einer Verstärkereinrichtung (18, 22);

Integrieren mindestens eines der Ausgangssignale;

Speichern mindestens eines der Ausgangssignale mittels einer Speicherschaltung (28); und

Sequentielles betasten der Ausgangssignale aus den Signalverarbeitungskanälen mittels eines Multiplexers (14) zum Erzeugen des seriellen Signals;

dadurch **gekennzeichnet**, daß

der Schritt des Verstärkens mindestens eines der Ausgangssignale ein proportionales Stromsignal liefert;

der Schritt des Integrierens mindestens eines der Ausgangssignale mittels einer Integrationsschaltung (26) durchgeführt wird, die elektrisch mit der Verstärkereinrichtung (18, 22) in Verbindung steht;

der Schritt des Speicherns das Speichern mindestens eines der integrierten Ausgangssignale umfaßt;

und der Schritt des Speicherns mittels der Speicherschaltung (28) durchgeführt wird, die elektrisch mit der Integrationsschaltung (26) über ein Übertragungsgatter (30) verbunden ist.

10. Verfahren nach Anspruch 9, bei dem der Schritt des Verstärkens mittels eines Vorwärtsleitwert-Verstärkers (22) durchgeführt wird.

11. Verfahren nach Anspruch 9, bei dem der Schritt des Integrierens mittels eines Integrationskondensators (26) durchgeführt wird, der elektrisch mit dem Vorwärtsleitwert-Verstärker (22) in Verbindung steht.

12. Verfahren nach Anspruch 9, bei dem der Schritt des Speicherns mittels eines Speicherkondensators (28) durchgeführt wird.

13. Verfahren nach Anspruch 9, **gekennzeichnet** durch den Schritt der Pufferung mindestens eines der Ausgangssignale mittels eines Puffers (34), der zum elektrischen Isolieren der Speicherschaltung (28) von dem Multiplexer (14) betreibbar ist.

14. Verfahren nach Anspruch 9, **gekennzeichnet** durch den Schritt des Rücksetzens mindestens eines der Signalverarbeitungskanäle mittels eines Rücksetz-Schalters (32), der zum selektiven Abführen der Ladung aus der Integrationsschaltung (26) betreibbar ist.

15. Verfahren nach Anspruch 9, **gekennzeichnet** durch den zusätzlichen Schritt der Pufferung des Ausgangssignals des Multiplexers (14).

16. Verfahren nach Anspruch 9, **gekennzeichnet** durch die zusätzlichen Schritte:

Integrieren des Ausgangssignals der Verstärkereinrichtung (18, 22) über eine vorbestimmte Zeitdauer;

Schließen eines Übertragungsgatters (30) zwischen der Speicherschaltung (28) und der Integrationsschaltung (26), um die Speicherschaltung (28) am Ende der vorbestimmten Zeitdauer in die Lage zu versetzen, eine Spannung zu halten, die einen Pegel aufweist, der proportional zur Ausgangsspannung der Integrationsschaltung (26) ist;

Öffnen des Übertragungsgatters (30), um die Übertragung von Ladung aus der Integrationsschaltung (26) zu der Speicherschaltung (28) zu verhindern; und

Entladen der Integrationsschaltung (26).

## Revendications

1. Appareillage pour convertir plusieurs signaux d'entrée de tension parallèles issus d'un groupement de détecteurs élémentaires (11) en un signal de sortie série, comprenant:

des moyens d'intégration (26) pour produire plusieurs tensions en réponse auxdits signaux d'entrée de tension;

des moyens de mémorisation (28) pouvant fonctionner pour produire et mémoriser plusieurs signaux;

des moyens (14) pour multiplexer lesdits signaux mémorisés pour produire ledit signal de sortie série,

caractérisé en ce qu'il comporte des moyens de conversion pour convertir lesdits signaux d'entrée de tension en plusieurs signaux de courant, ces moyens de conversion comprenant des moyens d'amplification (22) pour convertir lesdits signaux d'entrée en signaux de courant proportionnels;

les moyens d'intégration (26) étant prévus pour intégrer chacun desdits signaux de courant pendant un intervalle de temps prédéterminé, et ces moyens d'intégration (26) pouvant fonctionner pour produire plusieurs tensions en réponse auxdits signaux de courant;

les moyens d'intégration (26) étant électriquement reliés aux moyens de mémorisation (28) par l'intermédiaire de plusieurs portes de transmission (30); et

lesdits signaux mémorisés dans les moyens de mémorisation (28) étant proportionnels auxdites tensions produites par les moyens d'intégration (26).

2. Appareillage selon la revendication 1, dans lequel les moyens d'amplification (22) comprennent plusieurs amplificateurs à transconductance (22).

3. Appareillage selon la revendication 1, dans lequel les moyens d'intégration (26) comprennent un premier groupe de condensateurs (26).

4. Appareillage selon la revendication 3, dans lequel les moyens de mémorisation (28) comprennent un deuxième groupe de condensateurs (28).

5. Appareillage selon la revendication 1, dans lequel les moyens de multiplexage (14) comprennent un multiplexeur (14) pouvant fonctionner pour convertir lesdits signaux mémorisés en un signal de sortie série.

6. Appareillage selon la revendication 1, comprenant des moyens (18) pour amplifier lesdits signaux d'entrée en liaison électrique avec les moyens de conversion (22).

7. Appareillage selon la revendication 1, comprenant des moyens (34) pour séparer les sorties des moyens de mémorisation (28) en liaison électrique avec les moyens de multiplexage (14).

8. Appareillage selon la revendication 3, caractérisé en ce qu'il comprend un groupe d'interrupteurs de remise à zéro (32) pouvant fonctionner pour écouler sélectivement la charge contenue dans le premier groupe de condensateurs (26).

9. Procédé pour convertir les signaux de sortie parallèles d'un groupement de détecteurs élémentaires en un signal série, comprenant les étapes consistant à:

adresser lesdits signaux de sortie parallèles à plusieurs voies de traitement de signaux;

amplifier au moins un des signaux de sortie par des moyens d'amplification (18; 22);

intégrer au moins un des signaux de sortie;

mémoriser au moins un des signaux de sortie par un circuit de mémorisation (28); et

échantillonner séquentiellement les signaux de sortie des voies de traitement de signaux par un multiplexeur (14) pour produire ledit signal série,

caractérisé en ce que:

ladite étape consistant à amplifier au moins un des signaux de sortie fournit un signal de courant proportionnel;

ladite étape consistant à intégrer au moins un des signaux de sortie est effectuée par un circuit d'intégration (26) électriquement relié aux moyens d'amplification (18, 22);

ladite étape consistant à mémoriser comprend la mémorisation d'au moins un desdits signaux de sortie intégrés; et

ladite étape consistant à mémoriser est effectuée par le circuit de mémorisation (28) qui est relié électriquement au circuit d'intégration (26) par l'intermédiaire d'une porte de transmission (30).

10. Procédé selon la revendication 9, dans lequel l'étape consistant à amplifier est effectuée par un amplificateur à transconductance (22).

11. Procédé selon la revendication 9, dans lequel l'étape consistant à intégrer est effectuée par un condensateur d'intégration (26) relié électriquement à l'amplificateur à transconductance (22).

12. Procédé selon la revendication 9, dans lequel l'étape consistant à mémoriser est effectuée par un condensateur de mémorisation (28).

13. Procédé selon la revendication 9, caractérisé en ce qu'il comprend une étape consistant à séparer au moins un des signaux de sortie par un circuit séparateur (34) pouvant fonctionner pour isoler électriquement le circuit de mémorisation (28) du multiplexeur (14).

14. Procédé selon la revendication 9, caractérisé en ce qu'il comprend une étape consistant à remettre à zéro au moins une des voies de traitement de signaux (12) par un interrupteur de remise à zéro (32) pouvant fonctionner pour écouler sélectivement la charge du circuit d'intégration (26),

15. Procédé selon la revendication 9, caractérisé en ce qu'il comprend une étape supplémentaire consistant à séparer le signal de sortie du multiplexeur (14).

16. Procédé selon la revendication 9, caractérisé en ce qu'il comprend les étapes supplémentaires consistant à:

intégrer le signal de sortie des moyens d'amplification (18, 22) pendant un intervalle de temps prédéterminé ;

fermer une porte de transmission (30) insérée entre le circuit de mémorisation (28) et le circuit d'intégration (26) pour permettre au circuit de mémorisation (28) de maintenir une tension qui est à un niveau proportionnel à la tension de sortie du circuit d'intégration (26) à la fin dudit intervalle de temps prédéterminé;

ouvrir la porte de transmission (30) pour empêcher le transfert de charge du circuit d'intégration (26) au circuit de mémorisation (28); et

décharger le circuit d'intégration (26).